# EUROPÄISCHE PATENTANMELDUNG

(11) **EP 2 033 876 A1**
(43) Veröffentlichungstag der Anmeldung: **11.03.2009**
(21) Anmeldenummer: 07017686.2
(22) Anmeldetag: 10.09.2007
(51) Int. Cl.: B62D 5/083

(54) **Servolenksystem**

(71) Anmelder: Delphi Technologies, Inc., Troy, Michigan 48007 (US)
(72) Erfinder: Haupt, Jens, 61440 Oberursel (DE)
(74) Vertreter: Manitz, Finsterwald & Partner GbR

(57) **Zusammenfassung**

Es wird ein Servolenksystem für ein Fahrzeug beschrieben, bei dem einem mit einem Lenkrad verbundenen Torsionsstab ein über ein Steuergerät beaufschlagbarer magnetischer oder elektromagnetischer Aktuator zugeordnet ist, durch den die Torsionssteifigkeit des Systems in Abhängigkeit von der Fahrzeuggeschwindigkeit, Lenkwinkelgeschwindigkeit und/oder Querbeschleunigung veränderbar ist. Dabei wird die über das Steuergerät erfolgende elektrische Leistungsversorgung des magnetischen bzw. elektromagnetischen Aktuators unterbrochen oder reduziert, wenn eine Lenkwinkelgeschwindigkeit Null erfasst wird oder eine Lenkwinkelgeschwindigkeit Null und eine Fahrzeuggeschwindigkeit Null erfasst werden.

## Beschreibung

Die Erfindung betrifft ein Servolenksystem für ein Fahrzeug, bei dem einem mit einem Lenkrad verbundenen Torsionsstab ein über ein Steuergerät beaufschlagbarer magnetischer oder elektromagnetischer Aktuator zugeordnet ist, durch den die Torsionssteifigkeit des Systems in Abhängigkeit von der Fahrzeuggeschwindigkeit, Lenkwinkelgeschwindigkeit und/oder Querbeschleunigung veränderbar ist.

Bei solchen geschwindigkeitsgeregelten Servolenksystemen beträgt der maximale elektrische Systemstrom je nach Funktionalität etwa 3 bis 5 Ampere. Zur Änderung der Systemabstimmung kann der Ausgangsstrom in Abhängigkeit von unterschiedlichen Sensorsignalen wie insbesondere der Fahrzeuggeschwindigkeit, der Querbeschleunigung, der Lenkradgeschwindigkeit usw. unterschiedlich eingestellt werden. Zu diesen geschwindigkeitsgeregelten Servolenksystemen zählt unter anderem die sogenannte "Magnasteer"-Servolenkung, die mit einer Magnasteer-Zahnstangenlenkung mit tempoabhängiger Lenkkraftunterstützung ausgestattet ist, wobei die Servokraft per Magnetfeld erhöht bzw. verringert wird. Zudem werden bei dieser Servolenkung die aufzubringenden Lenkkräfte auch in Abhängigkeit von gemessenen Querbeschleunigungen variiert, um dem Fahrer eine Rückmeldung über die Reaktionen seines Fahrzeuges zu vermitteln.

Bei den bisher üblichen Servolenksystemen der eingangs genannten Art erfolgt die Abstimmung so, dass beispielsweise in einem Parkzustand das System den maximalen negativen Ausgangsstrom, zum Beispiel -3 Ampere, und bei höheren Geschwindigkeiten den maximalen positiven Ausgangsstrom, zum Beispiel +3 Ampere, an den magnetischen bzw. elektromagnetischen Aktuator liefert. Die unterschiedlichen Vorzeichen der Ströme ergeben sich durch die unterschiedlichen Stromrichtungen. Der elektromagnetische Aktuator wird hier also unabhängig von den jeweiligen Gegebenheiten stets mit dem maximalen Strom versorgt, was unnötige Energieverluste mit sich bringt.

Der Erfindung liegt die Aufgabe zugrunde, ein verbessertes Servolenksystem der eingangs genannten Art zu schaffen, bei dem die Energieverluste auf einfache und zuverlässige Weise weiter reduziert sind.

Diese Aufgabe wird erfindungsgemäß dadurch gelöst, dass die über das Steuergerät erfolgende elektrische Leistungsversorgung des magnetischen bzw. elektromagnetischen Aktuators unterbrochen oder reduziert wird, wenn eine Lenkwinkelgeschwindigkeit Null erfasst wird oder eine Lenkwinkelgeschwindigkeit Null und eine Fahrzeuggeschwindigkeit Null erfasst werden.

Aufgrund dieser Ausbildung wird der von dem Steuergerät an den magnetischen bzw. elektromagnetischen Aktuator gelieferte Strom über die Lebensdauer des Steuergeräts deutlich reduziert, wodurch die Energieverluste entsprechend reduziert werden. Damit kann auch das Steuergerät entsprechend kleiner dimensioniert werden.

Das Steuergerät ist bevorzugt so ausgeführt, dass bei einer erfassten Änderung der Lenkwinkelgeschwindigkeit ausgehend vom Wert Null die Versorgung des magnetischen bzw. elektromagnetischen Aktuators mit elektrischer Leistung beginnt.

Zweckmäßigerweise ist die Änderungsgeschwindigkeit der elektrischen Leistungsversorgung bei deren jeweiligem Beginn in Abhängigkeit von der Fahrzeuggeschwindigkeit, der Lenkwinkelgeschwindigkeit, dem Lenkraddrehwinkel, der Querbeschleunigung und/oder dergleichen gewählt.

Dabei wird vorzugsweise die Änderungsgeschwindigkeit der elektrischen Leistungsversorgung bei deren jeweiligem Beginn bei relativ höheren Fahrzeuggeschwindigkeiten höher gewählt als bei relativ kleineren Fahrzeuggeschwindigkeiten. Damit ist einerseits sichergestellt, dass das System bei höheren Fahrzeuggeschwindigkeiten schnell genug reagiert, während andererseits bei relativ kleineren Fahrzeuggeschwindigkeiten mit einer entsprechend langsameren Zunahme der Leistungsversorgung weiter Energie gespart werden kann.

Gemäß einer zweckmäßigen praktischen Ausführungsform des erfindungsgemäßen Servolenksystems ist eine bestimmte Zeitdauer vorgebbar, innerhalb der die über das Steuergerät erfolgende elektrische Leistungsversorgung des magnetischen bzw. elektromagnetischen Aktuators nach deren jeweiligem Beginn auf vorgebbare Systemparameter abstimmbar ist.

Vorteilhafterweise wird bei einer Fahrzeuggeschwindigkeit größer Null die über das Steuergerät erfolgende elektrische Leistungsversorgung des magnetischen bzw. elektromagnetischen Aktuators unterbrochen oder reduziert, sobald ein Lenkraddrehwinkel Null erfasst wird.

Fährt man also beispielsweise auf einer geraden Strecke, so kann auf eine elektrische Versorgung des magnetischen bzw. elektromagnetischen Aktuators verzichtet werden, wodurch entsprechend Energie eingespart wird. Mit der Leistungsversorgung wird beispielsweise dann wieder begonnen, wenn eine Lenkradbewegung erfasst wird. Fährt man beispielsweise auf der Autobahn mit höheren Geschwindigkeiten, so kann, wie bereits erwähnt, die Änderungsgeschwindigkeit der elektrischen Leistungsversorgung bei deren jeweiligen Beginn entsprechend hoch gewählt werden, um eine hinreichend schnelle Reaktion des Systems zu gewährleisten.

Von Vorteil ist insbesondere auch, wenn die über das Steuergerät erfolgende elektrische Leistungsversorgung des elektromagnetischen Aktuators unterbrochen oder reduziert wird, sobald eine Fahrzeuggeschwindigkeit Null und eine Lenkwinkelgeschwindigkeit Null erfasst werden. Damit ist unter anderem sichergestellt, dass beispielsweise in einem Parkzustand nicht unnötig Energie verbraucht wird. Dasselbe trifft auf den Fall zu, dass das Fahrzeug beispielsweise vor einer Verkehrsampel angehalten werden muss.

Es ist auch denkbar, die über das Steuergerät erfolgende elektrische Leistungsversorgung des magnetischen bzw. elektromagnetischen Aktuators bei einer erfassten Lenkraddrehgeschwindigkeit Null bzw. in dem Fall, dass eine Lenkwinkelgeschwindigkeit Null und eine Fahrzeuggeschwindigkeit Null erfasst werden, erst nach einer vorgebbaren Zeitdauer zu unterbrechen bzw. zu reduzieren.

Dabei kann auch diese Zeitdauer wieder in Abhängigkeit von den jeweiligen Gegebenheiten gewählt werden. So ist es beispielsweise denkbar, bei einer erfassten Lenkwinkelgeschwindigkeit Null die Zeitdauer bei relativ geringeren Fahrzeuggeschwindigkeiten länger zu wählen als bei relativ höheren Fahrzeuggeschwindigkeiten. Damit wird einerseits aufgrund der schnelleren Abschaltung bei geringeren Fahrzeuggeschwindigkeiten weiter Energie gespart, während andererseits bei höheren Fahrzeuggeschwindigkeiten die erforderliche Sicherheit sowie Lenkgefühl gewährleistet werden.

Grundsätzlich kann die elektrische Leistungsversorgung des magnetischen bzw. elektromagnetischen Aktuators auch in Abhängigkeit von anderen Sensorsignalen heruntergefahren oder aktiviert werden.

Mit dem erfindungsgemäßen Servolenksystem ergibt sich über die gesamte Lebensdauer des Steuergeräts hinweg eine spürbare Reduktion der Energieverluste.

Die Erfindung wird im Folgenden anhand eines Ausführungsbeispiels unter Bezugnahme auf die Zeichnung näher erläutert; in dieser zeigen:
- Fig. 1: eine schematische Darstellung der Energieübertragung in einem mit einem Servolenksystem ausgestatteten Kraftfahrzeug und
- Fig. 2: eine schematische Darstellung einer beispielhaften Ausführungsform des Steuergeräts des erfindungsgemäßen Servolenksystems.

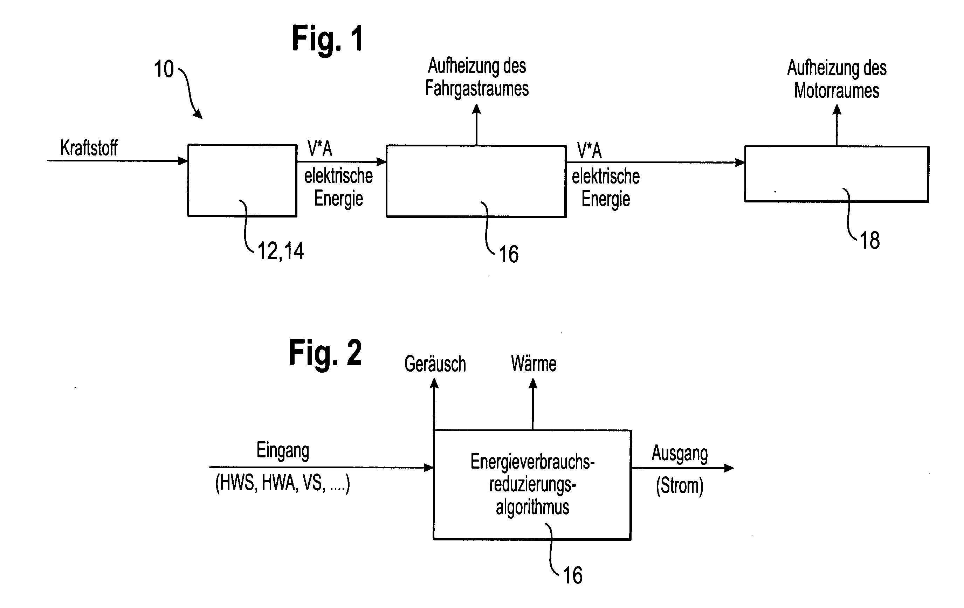

Fig. 1 zeigt in schematischer Darstellung die Energieübertragung in einem mit einem Servolenksystem 10 ausgestatteten Kraftfahrzeug.

Danach muss ein Verbrennungsmotor 12 mit zugeordnetem Generator 14 mit Kraftstoff versorgt werden, um unter anderem den Generator 14 anzutreiben, der ein Steuergerät 16 mit elektrischer Energie oder Leistung versorgt, über das unter anderem die Wicklung eines magnetischen oder elektromagnetischen Aktuators 18 mit elektrischer Energie versorgt wird, der parallel zu einem mit dem Lenkrad des Fahrzeugs verbundenen Torsionsstab vorgesehen ist. Dabei ist dieser elektromagnetische Aktuator 18 über das Steuergerät 16 beaufschlagbar, um gegebenenfalls die Torsionssteifigkeit des Servolenksystems in Abhängigkeit von der Fahrzeuggeschwindigkeit, Lenkwinkelgeschwindigkeit und/oder Querbeschleunigung zu verändern. Dabei kann das Servolenksystem 10 beispielsweise eine Zahnstangenlenkung mit tempoabhängiger Lenkkraftunterstützung umfassen, bei der die Servokraft über ein Magnetfeld erhöht bzw. verringert wird.

Wie der Fig: 1 entnommen werden kann, können Energieverluste beispielsweise dadurch auftreten, dass das Steuergerät 16 insbesondere den Fahrgastraum und der magnetische bzw. elektromagnetische Aktuator 18 insbesondere den Motorraum des Fahrzeugs aufheizen. Zudem bringt die unnötige Aufheizung des Fahrgastraums weitere Energieverluste mit sich, nachdem die Klimaanlage sowie der Lüfter stärker beansprucht werden.

Energieverluste werden nun dadurch reduziert, dass die über das Steuergerät 16 erfolgende elektrische Leistungsversorgung des magnetischen bzw. elektromagnetischen Aktuators 18 unterbrochen oder reduziert wird, wenn eine Lenkwinkelgeschwindigkeit Null erfasst wird oder eine Lenkwinkelgeschwindigkeit Null und eine Fahrzeuggeschwindigkeit Null erfasst werden.

Dazu ist das Steuergerät 16 so ausgelegt, dass es auf der Basis eines entsprechenden Energieverbrauchsreduzierungsalgorithmus arbeitet.

Fig. 2 zeigt in schematischer Darstellung eine beispielhafte Ausführungsform eines entsprechenden Steuergeräts 16 des erfindungsgemäßen Servolenksystems 10.

Wie anhand der Fig. 2 zu erkennen ist, steuert und/oder regelt das Steuergerät 16 die dem magnetischen bzw. elektromagnetischen Aktuator 18 zugeführte elektrische Leistung in Abhängigkeit von Eingangssignalen, die die Lenkwinkelgeschwindigkeit HWS, den Lenkraddrehwinkel HWA, die Fahrzeuggeschwindigkeit VS und/oder dergleichen umfassen. Dabei wird die dem magnetischen bzw. elektromagnetischen Aktuator (18) zugeführte elektrische Leistung so gesteuert bzw. geregelt, dass über die Lebensdauer des Steuergeräts 16 hinweg unnötige Energieverluste vermieden und damit insbesondere auch eine Erhitzung des Fahrgastraumes sowie eine unnötige Geräuschentwicklung im Fahrgastraum vermieden werden.

Das Steuergerät 16 kann insbesondere bei einer erfassten Änderung der Lenkwinkelgeschwindigkeit ausgehend vom Wert Null die Versorgung des magnetischen bzw. elektromagnetischen Aktuators 18 mit elektrischer Leistung beginnen.

Die Änderungsgeschwindigkeit der elektrischen Leistungsversorgung kann bei deren Beginn in Abhängigkeit von der Fahrzeuggeschwindigkeit VS, der Lenkwinkelgeschwindigkeit HWS, dem Lenkraddrehwinkel HWA, Querbeschleunigung und/oder dergleichen gewählt sein.

Die Änderungsgeschwindigkeit der elektrischen Leistungsversorgung kann bei deren jeweiligen Beginn bei relativ höheren Fahrzeuggeschwindigkeiten höher gewählt werden als bei relativ geringeren Fahrzeuggeschwindigkeiten.

Zudem kann eine bestimmte Zeitdauer vorgegeben werden, innerhalb der die über das Steuergerät 16 erfolgende elektrische Leistungsversorgung des magnetischen bzw. elektromagnetischen Aktuators 18 nach deren jeweiligem Beginn auf vorgebbare Systemparameter abstimmbar ist.

Das Steuergerät 16 bzw. dessen Energieverbrauchsreduzierungsalgorithmus kann insbesondere auch so ausgelegt sein, dass bei einer Fahrzeuggeschwindigkeit größer Null die über das Steuergerät 16 erfolgende elektrische Leistungsversorgung des elektrischen Aktuators 18 unterbrochen bzw. reduziert wird, sobald ein Lenkraddrehwinkel oder eine Lenkwinkelgeschwindigkeit Null erfasst wird.

Eine Unterbrechung bzw. Reduzierung der über das Steuergerät 16 erfolgenden elektrischen Leistungsversorgung des magnetischen bzw. elektromagnetischen Aktuators kann vor allem auch dann erfolgen, sobald eine Fahrzeuggeschwindigkeit Null und eine Lenkwinkelgeschwindigkeit Null erfasst werden.

Es ist insbesondere auch eine solche Ausführung des Steuergeräts 16 mit zugeordnetem Algorithmus denkbar, bei der die über das Steuergerät 16 erforderliche elektrische Leistungsversorgung des magnetischen bzw. elektromagnetischen Aktuators 18 bei einer erfassten Lenkwinkelgeschwindigkeit Null bzw. in dem Fall, dass eine Lenkwinkelgeschwindigkeit Null und eine Fahrzeuggeschwindigkeit Null erfasst werden, erst nach einer vorgebbaren Zeitdauer unterbrochen oder reduziert wird.

Dabei kann bei einer erfassten Lenkwinkelgeschwindigkeit Null die Zeitdauer, nach der die Leistungsversorgung unterbrochen bzw. reduziert wird, für relativ geringere Fahrzeuggeschwindigkeiten länger gewählt werden als für relativ höhere Fahrzeuggeschwindigkeiten.

### Bezugszeichenliste

- 10: Servolenksystem
- 12: Verbrennungsmotor
- 14: Generator oder Lichtmaschine
- 16: Steuergerät
- 18: magnetischer oder elektromagnetischer Aktuator

## Patentansprüche

1. Servolenksystem (10) für ein Fahrzeug, bei dem einem mit einem Lenkrad verbundenen Torsionsstab ein über ein Steuergerät (16) beaufschlagbarer magnetischer oder elektromagnetischer Aktuator (18) zugeordnet ist, durch den die Torsionssteifigkeit des Systems in Abhängigkeit von der Fahrzeuggeschwindigkeit, Lenkwinkelgeschwindigkeit und/oder Querbeschleunigung veränderbar ist,
**dadurchgekennzeichnet,**
**dass** die über das Steuergerät (16) erfolgende elektrische Leistungsversorgung des magnetischen bzw. elektromagnetischen Aktuators (18) unterbrochen oder reduziert wird, wenn eine Lenkwinkelgeschwindigkeit Null erfasst wird oder eine Lenkwinkelgeschwindigkeit Null und eine Fahrzeuggeschwindigkeit Null erfasst werden.

2. Servolenksystem nach Anspruch 1,
**dadurch gekennzeichnet,**
**dass** das Steuergerät bei einer erfassten Änderung der Lenkwinkelgeschwindigkeit ausgehend vom Wert Null die Versorgung des magnetischen bzw. elektromagnetischen Aktuators (18) mit elektrischer Leistung beginnt.

3. Servolenksystem nach Anspruch 1 oder 2,
**dadurchgekennzeichnet,**
**dass** die Änderungsgeschwindigkeit der elektrischen Leistungsversorgung bei deren jeweiligem Beginn in Abhängigkeit von der Fahrzeuggeschwindigkeit (VS), der Lenkwinkelgeschwindigkeit (HWS), dem Lenkraddrehwinkel (HWA), der Querbeschleunigung und/oder dergleichen gewählt ist.

4. Servolenksystem nach Anspruch 3,
**dadurch gekennzeichnet,**
**dass** die Änderungsgeschwindigkeit der elektrischen Leistungsversorgung bei deren jeweiligem Beginn bei relativ höheren Fahrzeuggeschwindigkeiten höher gewählt wird als bei relativ geringeren Fahrzeuggeschwindigkeiten.

5. Servolenksystem nach einem der vorhergehenden Ansprüche,
**dadurch gekennzeichnet,**
**dass** eine bestimmte Zeitdauer vorgebbar ist, innerhalb der die über das Steuergerät (16) erfolgende elektrische Leistungsversorgung des magnetischen bzw. elektromagnetischen Aktuators (18) nach deren jeweiligem Beginn auf vorgebbare Systemparameter abstimmbar ist.

6. Servolenksystem nach einem der vorhergehenden Ansprüche,
**dadurch gekennzeichnet,**
**dass** bei einer Fahrzeuggeschwindigkeit größer Null die über das Steuergerät (16) erfolgende elektrische Leistungsversorgung des magnetischen bzw. elektromagnetischen Aktuators (18) unterbrochen oder reduziert wird, sobald ein Lenkraddrehwinkel (HWA) Null erfasst wird.

7. Servolenksystem nach einem der vorhergehenden Ansprüche,
**dadurch gekennzeichnet,**
**dass** die über das Steuergerät (16) erfolgende elektrische Leistungsversorgung des magnetischen bzw. elektromagnetischen Aktuators (18) bei einer erfassten Lenkwinkelgeschwindigkeit Null bzw. in dem Fall, dass eine Lenkwinkelgeschwindigkeit Null und eine Fahrzeuggeschwindigkeit Null erfasst werden, erst nach einer vorgebbaren Zeitdauer unterbrochen oder reduziert wird.

8. Servolenksystem nach Anspruch 7,
**dadurch gekennzeichnet,**
**dass** bei einer erfassten Lenkwinkelgeschwindigkeit Null die Zeitdauer, nach der die Leistungsversorgung unterbrochen wird, für relativ geringere Fahrzeuggeschwindigkeiten länger gewählt ist als für relativ höhere Fahrzeuggeschwindigkeiten.
